# EUROPÄISCHE PATENTSCHRIFT

(11) **EP 2 577 112 B1**
(45) Veröffentlichungstag und Bekanntmachung des Hinweises auf die Patenterteilung: **04.11.2015**
(21) Anmeldenummer: 11714013.7
(22) Anmeldetag: 04.04.2011
(51) Int. Cl.: F16H 57/04

(54) **VERFAHREN UND EINRICHTUNG ZUR INNENBEÖLUNG EINER KOAXIAL ZUR ÖLPUMPE EINES GETRIEBES ANGEORDNETEN UND DIE ÖLPUMPE ANTREIBENDEN GETRIEBEWELLE**
METHOD AND DEVICE FOR THE INTERNAL OILING OF A GEAR SHAFT THAT IS ARRANGED COAXIALLY TO THE OIL PUMP OF A GEARBOX AND DRIVES THE OIL PUMP
PROCEDE ET DISPOSITIF DE LUBRIFICATION INTERNE D'UN ARBRE DE TRANSMISSION, MONTE DE MANIERE COAXIALE A LA POMPE A HUILE D'UNE BOITE DE VITESSE ET ACTIONNANT LA POMPE A HUILE

(30) Priorität: 28.05.2010 DE 102010021894
(43) Veröffentlichungstag der Anmeldung: 10.04.2013
(73) Patentinhaber: ZF Friedrichshafen AG, 88038 Friedrichshafen (DE)
(72) Erfinder: NIKOLAIZIG, Christian, 14542 Werder/Havel (DE)
(86) Internationale Anmeldenummer: PCT/EP2011/055163
(87) Internationale Veröffentlichungsnummer: WO 2011/147615

(56) Entgegenhaltungen:
- EP-A2- 0 985 852
- DE-A1- 3 905 770
- DE-A1-102004 018 226
- DE-C1- 3 939 651
- JP-A- 7 035 222
- JP-A- 11 051 161
- US-A1- 2008 191 422

## Beschreibung

Die vorliegende Erfindung bezieht sich auf ein Verfahren zur Innenbeölung einer koaxial zur Ölpumpe eines Getriebes angeordneten und die Ölpumpe antreibenden Getriebewelle gemäß dem Oberbegriff des Patentanspruchs 1. Desweiteren bezieht sich die Erfindung auf eine Einrichtung zur Innenbeölung einer koaxial zur Ölpumpe eines Getriebes angeordneten und die Ölpumpe antreibenden Getriebewelle, insbesondere zur Durchführung des erfindungsgemäßen Verfahrens.

Zur Innenbeölung von Getriebewellen sind aus dem Stand der Technik unterschiedliche Verfahren und Einrichtungen bekannt. Beispielsweise kann die Innenbeölung von Getriebewellen durch passive Beölungssysteme erfolgen, bei denen spezielle Ölleiteinrichtungen verwendet werden, welche das Öl mittels Tropfkanten im Gehäuse oder Ölfangeinrichtungen sammeln und über Kanäle zu einem Ende der zu beölenden Getriebewelle leiten; das Öl wird mittels einer an dem einen Ende der zu beölenden Getriebewelle in die Welle hineinragenden Ölführung oder mittels einer Drehdurchführung in die Welle geleitet.

Aus der DE 10 2005 052 450 A1 der Anmelderin ist eine Einrichtung zum Beölen von Bauteilen mittels drehender Wellen, beispielsweise in Kraftfahrzeug-Automatgetrieben oder anderen Einrichtungen mit rotierenden Bauteilen, bekannt.

Die bekannte Einrichtung umfasst zumindest zwei in der Fließrichtung des Öls angeordnete hohle Wellen, wobei eine Hauptwelle koaxial in einem Aufnahmebereich einer Antriebswelle angeordnet und in dieser über ein Wälzlager gelagert ist. Um Schmierstellen bei unterschiedlichen Ölförderwirkungsgraden und Drehzahlen der Wellen ausreichend mit schmierendem Öl versorgen zu können, ist gemäß der DE 10 2005 052 450 A1 vorgesehen, dass an der Antriebswelle ein mit zumindest einer flexiblen Wandung versehener Öl-Vorratsbehälter angeordnet ist, dessen Innenraum über wenigstens eine radiale Bohrung mit der axialen Bohrung der Antriebswelle verbunden ist, und dass in dem von der Hauptwelle entfernten Ende der Antriebswelle ein den Öldurchtritt regulierendes Bauteil angeordnet ist.

In nachteiliger Weise werden bei derartigen Systemen zusätzliche Bauteile, wie beispielsweise Ölleiteinrichtungen und gegebenenfalls eine Drehdurchführung benötigt, was sich auf den Montageaufwand und die Herstellungs- und Wartungskosten negativ auswirkt.

Ferner kann die Innenbeölung von Getriebewellen durch aktive Beölungssysteme gewährleistet werden. Hierbei wird das Öl durch eine Pumpe und ein Ölleitungssystem zu einer Einspritzdüse am Ende der zu beölenden Getriebewelle bzw. zu einer Drehdurchführung gepumpt und in die Welle eingespritzt. Auch bei aktiven Beölungssystemen sind in nachteiliger Weise zusätzliche Bauteile, wie z.B. Ölleiteinrichtungen, eine Einspritzdüse und eine Drehdurchführung erforderlich.

Beispielsweise ist aus der DE 10 2004 018 226 A1 der Anmelderin eine Einrichtung zur Ölversorgung von Wellen, insbesondere Getriebewellen, welche eine axial verlaufende Bohrung bzw. Öldurchführung aufweisen, bekannt, welche mindestens eine in der mit der axial verlaufenden Bohrung bzw. Öldurchführung versehenen Welle vorgesehene Ölbohrung aufweist, die von der Oberfläche der Welle in die axial verlaufende Bohrung bzw. Öldurchführung führt. Des weiteren weist die bekannte Einrichtung mindestens eine außerhalb der Welle angeordnete Düse, über die Öl in die mindestens eine Ölbohrung eingespritzt wird, wobei die Einspritzgeschwindigkeit des Öles derart bestimmt ist, dass der Strahl mindestens bis in die Öldurchführung in der Welle gelangt, wo er zerfällt und in der Welle verteilt wird.

Schließlich offenbart die DE 39 39 651 C1, welche als der nächste Stand der Technik angesehen wird, ein Antriebsaggregat, bei dem von einer Zahnradpumpe austretendes Leckageöl zur Schmierung eines Wälzlagers genutzt wird.

Der vorliegenden Erfindung liegt die Aufgabe zugrunde, ein Verfahren zur Innenbeölung einer koaxial zur Ölpumpe eines Getriebes angeordneten und die Ölpumpe antreibenden Getriebewelle anzugeben, durch dessen Durchführung weniger zusätzliche Bauteile benötigt werden, als bei den aus dem Stand der Technik bekannten Verfahren. Ein weiteres Ziel der Erfindung ist es, eine Einrichtung zur Innenbeölung einer koaxial zur Ölpumpe eines Getriebes angeordneten und die Öl-pumpe antreibenden Getriebewelle, insbesondere zur Durchführung des erfindungsgemä ßen Verfahrens anzugeben, welche eine geringe Anzahl von zusätzlichen Bauteilen aufweist und eine effektive Innenbeölung gewährleistet.

Diese Aufgabe wird für ein Verfahren zur Innenbeölung einer Getriebewelle durch die Merkmale des Patentanspruchs 1 gelöst. Eine Einrichtung zur Innenbeölung einer Getriebewelle, insbesondere zur Durchführung des erfindungsgemäßen Verfahrens ist Gegenstand der unabhängigen Patentansprüche 6 und 10. Weitere erfindungsgemäße Ausgestaltungen und Vorteile gehen aus den entsprechenden Unteransprüchen hervor.

Demnach wird ein Verfahren zur Innenbeölung einer koaxial zur Ölpumpe eines Getriebes angeordneten und die Ölpumpe antreibenden Getriebewelle vorgeschlagen, im Rahmen dessen die Innenbeölung durch das Leckageöl der in das Getriebe integrierten Ölpumpe erfolgt.

Die in das Getriebe integrierte Ölpumpe wird durch die zu beölende Getriebewelle angetrieben und ist koaxial zu dieser angeordnet und vorzugsweise an die Kupplungsglocke angeflanscht. Gemäß der Erfindung wird das Leckageöl zumindest einer Pumpenwellenlagerstelle in die als Hohlwelle ausgeführte Pumpenwelle geleitet.

Wenn die Beölung der Pumpenwellenlagerstellen nicht ausreichend ist, kann diese durch geeignete Maßnahmen verbessert werden. Zu diesem Zweck können gemäß der Erfindung die Lagerstellen der Pumpenwelle durch je eine Nut im Pumpengehäuse oder im Pumpendeckel mit der Druckseite der Pumpe verbunden sein.

Das Öl wird in die zu beölende Getriebewelle über einen Mitnehmer weitergeleitet, welcher eine Innenbohrung aufweist und die Pumpenwelle mit der zu beölenden Getriebewelle kraftschlüssig verbindet. Für den Fall, dass die Leckageölmenge für die Innenbeölung der zu beölenden Getriebewelle nicht ausreicht, wird gemäß einer Weiterbildung der Erfindung die Leckageölmenge durch geeignete Maßnahmen an zumindest einer Pumpenwellenlagerstelle gezielt vergrößert.

Beispielsweise kann für den Fall, dass die Pumpenwellenlagerung als Gleitlagerung ausgeführt ist, die Leckageölmenge durch Einbringen einer axialen Nut in zumindest eine Pumpenwellenlagerstelle im Pumpengehäuse vergrößert werden. In vorteilhafter Weise kann das Leckageöl einer weiteren Lagerstelle der Pumpenwelle sowie auftretende Leckageölstromverluste zwischen der Pumpenwelle und dem Mitnehmer durch geeignete Maßnahmen zur Beölung weiterer Komponenten des Getriebes, beispielsweise von Lagern, verwendet werden.

Die erfindungsgemäße Einrichtung zur Innenbeölung einer koaxial zur Ölpumpe eines Getriebes angeordneten und die Ölpumpe antreibenden Getriebewelle weist gemäß der Erfindung Mittel auf, über die das Leckageöl zumindest einer Pumpenwellenlagerstelle an die zu beölende Getriebewelle weitergeleitet wird. Wie bereits erläutert, sind als Mittel zur Weiterleitung des Leckageöls an die zu beölende Getriebewelle, zum Einen die gemäß der Erfindung als Hohlwelle ausgeführte Pumpenwelle und zum Anderen der eine Innenbohrung aufweisende Mitnehmer vorgesehen; das Leckageöl zumindest einer Pumpenwellenlagerstelle ist in die als Hohlwelle ausgeführte Pumpenwelle leitbar und über die Innenbohrung des Mitnehmers an die zu beölende Getriebewelle weiterleitbar.

Die Einrichtung zur Innenbeölung einer Getriebewelle umfasst optional Mittel, durch die die Leckageölmenge der zumindest einen Pumpenwellenlagerstelle gezielt vergrößert wird, wobei für den Fall, dass die Pumpenwellenlagerung als Gleitlagerung ausgeführt ist, die Mittel eine axiale Nut in zumindest einer Pumpenwellenlagerstelle im Pumpengehäuse umfassen. Die Einrichtung kann derart aufgebaut sein, dass das Leckageöl einer weiteren Lagerstelle der Pumpenwelle sowie auftretende Leckageölstromverluste zwischen der Pumpenwelle und dem Mitnehmer zur Beölung weiterer Komponenten des Getriebes verwendbar sind.

Zur Verbesserung der Beölung der Pumpenwellenlagerung können die Lagerstellen der Pumpenwelle durch je eine sich radial erstreckende Nut im Pumpengehäuse oder im Pumpendeckel mit der Druckseite der Ölpumpe verbunden sein.

Durch die erfindungsgemäße Konzeption wird die Sicherstellung der Beölung einer Getriebewelle bzw. der auf der Getriebewelle montierten Bauteile sowie der Wellenlagerung im Getriebe gewährleistet, wobei in vorteilhafter Weise das ohnehin vorhandene Leckageöl der in das Getriebe integrierten Ölpumpe verwendet wird.

Zudem entfallen die nach dem Stand der Technik erforderlichen Bauteile, da eine Einspritzdüse sowie Ölleitbleche, Ölführungen, und Drehdurchführungen für die Innenbeölung der Getriebewelle nicht benötigt werden, was in einer Reduzierung des Montageaufwands für die Einrichtung zur Innenbeölung und der Kosten resultiert; die Beölung wird im Gegensatz zu den aus dem Stand der Technik bekannten Systemen nicht mehr direkt über die Ölpumpe oder über ein bekanntes passives Beölungssystem realisiert.

Ferner steht durch die erfindungsgemäße Konzeption die volle Förderleistung der Ölpumpe und somit mehr Öl für die anderen Beölungsstellen des Getriebes zur Verfügung. Es ist auch möglich, die Ölpumpe kleiner zu dimensionieren, wodurch eine Wirkungsgradsteigerung erzielt wird.

Die Erfindung wird im Folgenden anhand der beigefügten Figuren beispielhaft näher erläutert. Es zeigen:
- Figur 1:: Eine Schnittansicht eines Teils eines Getriebes zur Veranschaulichung der Bauteile einer erfindungsgemäßen Einrichtung zur Innenbeölung einer Getriebewelle; und
- Figur 2:: Eine Übersichtsdarstellung eines Getriebes umfassend eine erfindungsgemäße Einrichtung zur Innenbeölung einer Getriebewelle.

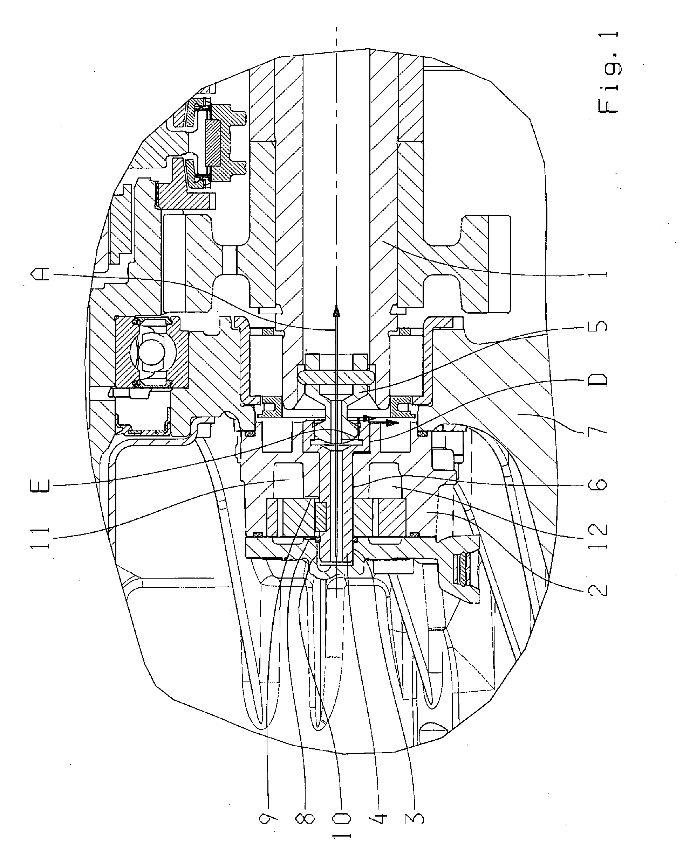

Gemäß der Erfindung erfolgt die Innenbeölung einer Getriebewelle durch das ohnehin vorhandene Leckageöl der in das Getriebe integrierten Ölpumpe. Bezugnehmend auf Figur 1 ist die an die Kupplungsglocke 7 angeflanschte Ölpumpe 2 koaxial zu der zu beölenden Getriebewelle 1 angeordnet und wird durch diese angetrieben.

Erfindungsgemäß wird das Leckageöl zumindest einer Pumpenwellenlagerstelle 3 in die als Hohlwelle ausgeführte Pumpenwelle 4 geleitet und über einen eine Innenbohrung aufweisenden und die Pumpenwelle 4 mit der zu beölenden Getriebewelle 1 verbindenden Mitnehmer 5, an die zu beölende und ebenfalls eine Innenbohrung aufweisende Getriebewelle 1 weitergeleitet. Der Leckageölfluss zur Innenbeölung der Getriebewelle 1 ist in Figur 1 durch den Pfeil A veranschaulicht.

Für den Fall, dass die Leckageölmenge der zumindest einen Pumpenwellenlagerstelle 3 für die Innenbeölung der zu beölenden Getriebewelle 1 nicht ausreicht, wird sie durch geeignete Maßnahmen an zumindest einer Lagerstelle der Pumpenwelle gezielt vergrößert.

Bei dem in Figur 1 gezeigten Beispiel ist die Pumpenwellenlagerung als Gleitlagerung ausgeführt; erfindungsgemäß kann hierbei die Leckageölmenge durch Einbringen einer axialen Nut 10 in eine erste Pumpenwellenlagerstelle 3 im Pumpengehäuse vergrößert werden.

In vorteilhafter Weise kann das Leckageöl einer zweiten Lagerstelle 6 der Pumpenwelle 4, veranschaulicht durch Pfeil D, sowie auftretende Leckageölstromverluste zwischen der Pumpenwelle 4 und dem Mitnehmer 5, veranschaulicht durch Pfeil E, zur Beölung weiterer Komponenten des Getriebes, verwendet werden.

Ferner kann vorgesehen sein, dass die Beölung der Pumpenwellenlagerung dadurch verbessert wird, dass die Lagerstellen 3, 6 der Pumpenwelle 4 durch je eine sich radial erstreckende Nut 8, 9 im Pumpengehäuse oder im Pumpendeckel mit der Druckseite 11 der Ölpumpe 2 verbunden sind. In Figur 1 ist die Saugseite der Ölpumpe 2 mit dem Bezugszeichen 12 versehen.

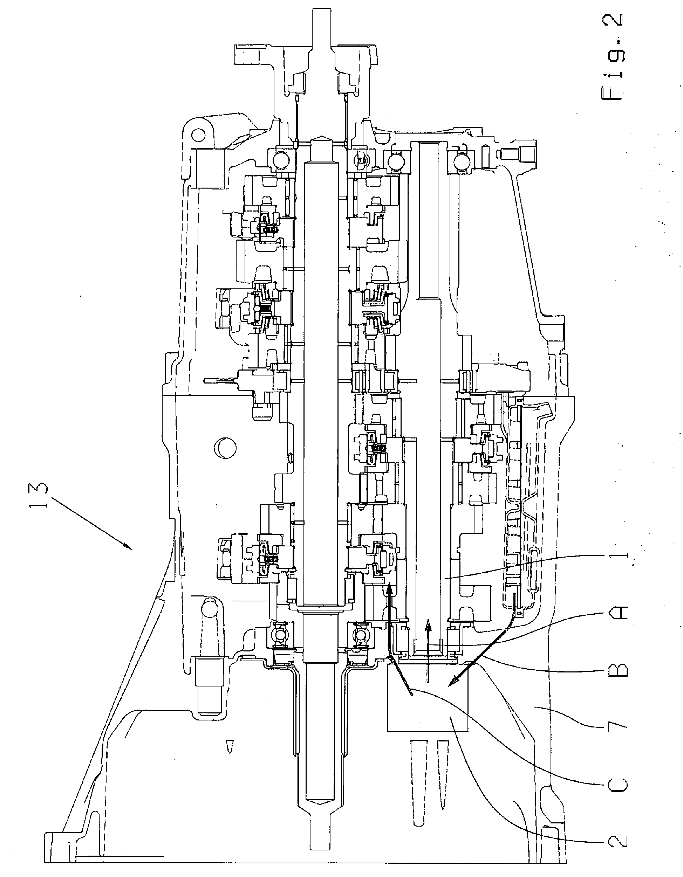

Gegenstand der Figur 2 ist eine Übersichtsdarstellung eines Getriebes 13, in das eine erfindungsgemäße Einrichtung zur Innenbeölung einer Getriebewelle 1 integriert ist. Hierbei wird der Leckageölfluss zur Innenbeölung der Getriebewelle 1 durch Pfeil A, der Ölansaugstrom durch Pfeil B und der Druckölstrom zu den Beölungsstellen des Getriebes durch Pfeil C veranschaulicht.

### Bezugszeichen

- 1: Getriebewelle
- 2: Ölpumpe
- 3: Pumpenwellenlagerstelle
- 4: Pumpenwelle
- 5: Mitnehmer
- 6: Pumpenwellenlagerstelle
- 7: Kupplungsglocke
- 8: Nut
- 9: Nut
- 10: Nut
- 11: Druckseite der Ölpumpe 2
- 12: Saugseite der Ölpumpe 2
- 13: Getriebe
- A: Leckageölfluss zur Innenbeölung der Getriebewelle 1
- B: Ölansaugstrom
- C: Druckölstrom
- D: Leckageöl der zweiten Lagerstelle 6
- E: Leckageölstromverluste zwischen der Pumpenwelle 4 und dem Mitnehmer 5

## Patentansprüche

1. Verfahren zur Innenbeölung einer koaxial zur Ölpumpe (2) eines Getriebes (13) angeordneten und die Ölpumpe (2) antreibenden Getriebewelle (1), wobei die Innenbeölung der Getriebewelle (1) durch das ohnehin vorhandene Leckageöl der in das Getriebe (13) integrierten Ölpumpe (2) erfolgt, **dadurch gekennzeichnet, dass** das Leckageöl zumindest einer Pumpenwellenlagerstelle (3) in die als Hohlwelle ausgeführte Pumpenwelle (4) geleitet und über einen eine Innenbohrung aufweisenden und die Pumpenwelle (4) mit der zu beölenden Getriebewelle (1) verbindenden Mitnehmer (5) an die zu beölende Getriebewelle (1) weitergeleitet wird.

2. Verfahren zur Innenbeölung einer Getriebewelle (1), nach Anspruch 1, **dadurch gekennzeichnet, dass** für den Fall, dass die Leckageölmenge der zumindest einen Pumpenwellenlagerstelle (3) für die Innenbeölung der zu beölenden Getriebewelle (1) nicht ausreicht, die Leckageölmenge der zumindest einen Pumpenwellenlagerstelle (3) gezielt vergrößert wird.

3. Verfahren zur Innenbeölung einer Getriebewelle (1), nach Anspruch 2, **dadurch gekennzeichnet, dass** für den Fall, dass die Pumpenwellenlagerung als Gleitlagerung ausgeführt ist, die Leckageölmenge durch Einbringen einer axialen Nut (10) in zumindest eine Pumpenwellenlagerstelle (3) im Pumpengehäuse vergrößert wird.

4. Verfahren zur Innenbeölung einer Getriebewelle (1), nach Anspruch 1, 2 oder 3, **dadurch gekennzeichnet, dass** das Leckageöl einer weiteren Lagerstelle (6) der Pumpenwelle (4) sowie auftretende Leckageölstromverluste zwischen der Pumpenwelle (4) und dem Mitnehmer (5) zur Beölung weiterer Komponenten des Getriebes (13) verwendet werden.

5. Verfahren zur Innenbeölung einer Getriebewelle (1), nach Anspruch 1, 2, 3 oder 4, **dadurch gekennzeichnet, dass** die Beölung der Pumpenwellenlagerung dadurch verbessert wird, dass die Lagerstellen (3, 6) der Pumpenwelle (4) durch je eine sich radial erstreckende Nut (8, 9) im Pumpengehäuse oder im Pumpendeckel mit der Druckseite (11) der Ölpumpe (2) verbunden sind.

6. Einrichtung zur Innenbeölung einer koaxial zur Ölpumpe (2) eines Getriebes (13) angeordneten und die Ölpumpe (2) antreibenden Getriebewelle (1), wobei sie Mittel aufweist, über die das Leckageöl zumindest einer Pumpenwellenlagerstelle (3) an die zu beölende Getriebewelle (1) weitergeleitet wird, **dadurch gekennzeichnet, dass** die Mittel zur Weiterleitung des Leckageöls an die zu beölende Getriebewelle (1), die als Hohlwelle ausgeführte Pumpenwelle (4) und einen eine Innenbohrung aufweisenden, die Pumpenwelle (4) mit der zu beölenden Getriebewelle (1) verbindenden Mitnehmer (5) umfassen, derart, dass das Leckageöl zumindest einer Pumpenwellenlagerstelle (3) in die als Hohlwelle ausgeführte Pumpenwelle (4) leitbar und über die Innenbohrung des Mitnehmers (5) an die zu beölende Getriebewelle (1) weiterleitbar ist.

7. Einrichtung zur Innenbeölung einer Getriebewelle (1), nach Anspruch 6, **dadurch gekennzeichnet, dass** Mittel (10) vorgesehen sind, durch die die Leckageölmenge der zumindest einen Pumpenwellenlagerstelle (3) gezielt vergrößert wird.

8. Einrichtung zur Innenbeölung einer Getriebewelle (1), nach Anspruch 7, **dadurch gekennzeichnet, dass** für den Fall, dass die Pumpenwellenlagerung als Gleitlagerung ausgeführt ist, die Mittel (10) eine axiale Nut (10) in zumindest eine Pumpenwellenlagerstelle (3) im Pumpengehäuse umfassen.

9. Einrichtung zur Innenbeölung einer Getriebewelle (1), nach einem der Ansprüche 6 bis 8, **dadurch gekennzeichnet, dass** das Leckageöl einer weiteren Lagerstelle (6) der Pumpenwelle (4) sowie auftretende Leckageölstromverluste zwischen der Pumpenwelle (4) und dem Mitnehmer (5) zur Beölung weiterer Komponenten des Getriebes (13) verwendbar sind.

10. Einrichtung zur Innenbeölung einer Getriebewelle (1), nach dem Oberbegriff von Anspruch 6 oder nach einem der Ansprüche 6 bis 9, **dadurch gekennzeichnet, dass** zur Verbesserung der Beölung der Pumpenwellenlagerung die Lagerstellen (3, 6) der Pumpenwelle (4) durch je eine sich radial erstreckende Nut (8, 9) im Pumpengehäuse oder im Pumpendeckel mit der Druckseite (11) der Ölpumpe (2) verbunden sind.

## Claims

1. Method for internal lubrication of a transmission shaft (1) which is arranged coaxially with respect to the oil pump (2) of a transmission (13) and drives the oil pump (2), the internal lubrication of the transmission shaft (1) taking place by way of the leakage oil, which is present in any case, of the oil pump (2) which is integrated into the transmission (13), **characterized in that** the leakage oil of at least one pump shaft bearing point (3) is guided into the pump shaft (4) which is configured as a hollow shaft, and is guided further to the transmission shaft (1) to be lubricated via a tappet (5) which has an internal bore and connects the pump shaft (4) to the transmission shaft (1) to be lubricated.

2. Method for internal lubrication of a transmission shaft (1), according to Claim 1, **characterized in that** the leakage oil quantity of the at least one pump shaft bearing point (3) is increased in a targeted manner for the case where the leakage oil quantity of the at least one pump shaft bearing point (3) is not sufficient for the internal lubrication of the transmission shaft (1) to be lubricated.

3. Method for internal lubrication of a transmission shaft (1), according to Claim 2, **characterized in that**, for the case where the pump shaft bearing is configured as a plain bearing, the leakage oil quantity is increased by way of the introduction of an axial groove (10) into at least one pump shaft bearing point (3) in the pump housing.

4. Method for internal lubrication of a transmission shaft (1), according to Claim 1, 2 or 3, **characterized in that** the leakage oil of a further bearing point (6) of the pump shaft (4) and leakage oil flow losses which occur between the pump shaft (4) and the tappet (5) are used for lubricating further components of the transmission (13).

5. Method for internal lubrication of a transmission shaft (1), according to Claim 1, 2, 3 or 4, **characterized in that** the lubrication of the pump shaft bearing is improved by virtue of the fact that the bearing points (3, 6) of the pump shaft (4) are connected to the pressure side (11) of the oil pump (2) by way of in each case one radially extending groove (8, 9) in the pump housing or in the pump cover.

6. Device for internal lubrication of a transmission shaft (1) which is arranged coaxially with respect to the oil pump (2) of a transmission (13) and drives the oil pump (2), the said device having means, via which the leakage oil of at least one pump shaft bearing point (3) is guided further to the transmission shaft (1) to be lubricated, **characterized in that** the means for guiding the leakage oil further to the transmission shaft (1) to be lubricated comprise the pump shaft (4) which is configured as a hollow shaft and a tappet (5) which has an internal bore and connects the pump shaft (4) to the transmission shaft (1) to be lubricated, in such a way that the leakage oil of at least one pump shaft bearing point (3) can be guided into the pump shaft (4) which is configured as a hollow shaft, and can be guided further via the internal bore of the tappet (5) to the transmission shaft (1) to be lubricated.

7. Device for internal lubrication of a transmission shaft (1), according to Claim 6, **characterized in that** means (10) are provided, by way of which the leakage oil quantity of the at least one pump shaft bearing point (3) is increased in a targeted manner.

8. Device for internal lubrication of a transmission shaft (1), according to Claim 7, **characterized in that**, for the case where the pump shaft bearing is configured as a plain bearing, the means (10) comprise an axial groove (10) into at least one pump shaft bearing point (3) in the pump housing.

9. Device for internal lubrication of the transmission shaft (1), according to one of Claims 6 to 8, **characterized in that** the leakage oil of a further bearing point (6) of the pump shaft (4) and leakage oil flow losses which occur between the pump shaft (4) and the tappet (5) can be used for lubricating further components of the transmission (13).

10. Device for internal lubrication of a transmission shaft (1), according to the precharacterizing clause of Claim 6 or according to one of Claims 6 to 9, **characterized in that**, in order to improve the lubrication of the pump shaft bearing, the bearing points (3, 6) of the pump shaft (4) are connected to the pressure side (11) of the oil pump (2) by way of in each case one radially extending groove (8, 9) in the pump housing or in the pump cover.

## Revendications

1. Procédé de lubrification interne d'un arbre de transmission (1) monté de manière coaxiale à la pompe à huile (2) d'une boîte de vitesses (13) et actionnant la pompe à huile (2), dans lequel on effectue la lubrification interne de l'arbre de transmission (1) au moyen de l'huile de fuite de toute façon présente de la pompe à huile (2) intégrée dans la boîte de vitesses (13), **caractérisé en ce que** l'on conduit l'huile de fuite d'au moins un point d'appui (3) de l'arbre de pompe dans l'arbre de pompe (4) réalisé sous forme d'arbre creux et on la transfère à l'arbre de transmission à lubrifier (1) au moyen d'un entraîneur (5) présentant un alésage interne et reliant l'arbre de pompe (4) à l'arbre de transmission à lubrifier (1).

2. Procédé de lubrification interne d'un arbre de transmission (1) selon la revendication 1, **caractérisé en ce que**, dans le cas où la quantité d'huile de fuite dudit au moins un point d'appui (3) de l'arbre de pompe ne suffit pas pour la lubrification interne de l'arbre de transmission à lubrifier (1), on augmente de façon ciblée la quantité d'huile de fuite dudit au moins un point d'appui (3) de l'arbre de pompe.

3. Procédé de lubrification interne d'un arbre de transmission (1) selon la revendication 2, **caractérisé en ce que**, dans le cas où le palier de l'arbre de pompe est un palier lisse, on augmente la quantité d'huile de fuite par la réalisation d'une rainure axiale (10) dans au moins un point d'appui (3) de l'arbre de pompe dans le boîtier de la pompe.

4. Procédé de lubrification interne d'un arbre de transmission (1) selon la revendication 1, 2 ou 3, **caractérisé en ce que** l'on utilise l'huile de fuite d'un autre point d'appui (6) de l'arbre de pompe (4) ainsi que les pertes d'écoulement d'huile de fuite qui se produisent entre l'arbre de pompe (4) et l'entraîneur (5) pour la lubrification d'autres composants de la boîte de vitesses (13).

5. Procédé de lubrification interne d'un arbre de transmission (1) selon la revendication 1, 2, 3 ou 4, **caractérisé en ce que** l'on améliore la lubrification du palier de l'arbre de pompe, par le fait que les points d'appui (3, 6) de l'arbre de pompe (4) sont raccordés au côté de refoulement (11) de la pompe à huile (2) au moyen d'une rainure respective (8, 9) s'étendant radialement dans le boîtier de pompe ou dans le couvercle de pompe.

6. Dispositif de lubrification interne d'un arbre de transmission (1) monté de manière coaxiale à la pompe à huile (2) d'une boîte de vitesses (13) et actionnant la pompe à huile (2), dans lequel il présente des moyens par lesquels l'huile de fuite d'au moins un point d'appui (3) de l'arbre de pompe est transférée à l'arbre de transmission à lubrifier (1), **caractérisé en ce que** les moyens pour transférer l'huile de fuite à l'arbre de transmission à lubrifier (1) comprennent l'arbre de pompe (4) réalisé sous forme d'arbre creux et un entraîneur (5) présentant un alésage interne et reliant l'arbre de pompe (4) à l'arbre de transmission à lubrifier (1), de telle manière que l'huile de fuite d'au moins un point d'appui (3) de l'arbre de pompe puisse être conduite dans l'arbre de pompe (4) réalisé sous forme d'arbre creux et être transférée à l'arbre de transmission à lubrifier (1) via l'alésage interne de l'entraîneur (5).

7. Dispositif de lubrification interne d'un arbre de transmission (1) selon la revendication 6, **caractérisé en ce qu'**il est prévu des moyens (10) par lesquels la quantité d'huile de fuite dudit au moins un point d'appui (3) de l'arbre de pompe est augmentée de façon ciblée.

8. Dispositif de lubrification interne d'un arbre de transmission (1) selon la revendication 7, **caractérisé en ce que**, dans le cas où le palier de l'arbre de pompe est un palier lisse, les moyens (10) comprennent une rainure axiale (10) dans au moins un point d'appui (3) de l'arbre de pompe dans le boîtier de pompe.

9. Dispositif de lubrification interne d'un arbre de transmission (1) selon l'une quelconque des revendications 6 à 8, **caractérisé en ce que** l'huile de fuite d'un autre point d'appui (6) de l'arbre de pompe (4) ainsi que des pertes d'écoulement d'huile de fuite se produisant entre l'arbre de pompe (4) et l'entraîneur (5) peuvent être utilisées pour la lubrification d'autres composants de la boîte de vitesses (13).

10. Dispositif de lubrification interne d'un arbre de transmission (1) selon le préambule de la revendication 6 ou selon l'une quelconque des revendications 6 à 9, **caractérisé en ce que**, pour améliorer la lubrification du palier de l'arbre de pompe, les points d'appui (3, 6) de l'arbre de pompe (4) sont raccordés au côté de refoulement (11) de la pompe à huile (2) au moyen d'une rainure respective (8, 9) s'étendant radialement dans le boîtier de pompe ou dans le couvercle de pompe.
